# EUROPÄISCHE PATENTANMELDUNG

(11) **EP 0 616 008 A1**
(43) Veröffentlichungstag der Anmeldung: **21.09.1994**
(21) Anmeldenummer: 94102942.3
(22) Anmeldetag: 26.02.1994
(51) Int. Cl.: C08K 5/16, C08L 77/00

(54) **Mischung aus Dicyandiamid und Melamin sowie, flammfestes Polyamid das diese Mischung enthält**

(30) Priorität: 15.03.1993 AT 495/93
(71) Anmelder: Chemie Linz GmbH, A-4021 Linz (AT)
(72) Erfinder: Horacek, Heinrich, Dr., A-4048 Puchenau (AT); Reichenberger, Rudolf, A-4030 Linz (AT)
(74) Vertreter: Kunz, Ekkehard, Dr.

(57) **Zusammenfassung**

Homogene Mischung aus Dicyandiamid und Melamin eignet sich zur Flammfest-Ausrüstung von Polyamid.

## Beschreibung

Zur Flammfestausrüstung von Polyamiden sind bereits mehrere Flammhemmer, unter anderem auch Melamin (US 4 504 611) und Dicyandiamid (DE 39 09 145) bekannt.
Bei Verwendung von Melamin als Flammhemmer treten jedoch einige Nachteile auf. So neigt Melamin bei der Verarbeitung der Polyamide zum Ausblühen, wodurch es teilweise an die Oberfläche wandert und beispielsweise in den Spritzgußformen einen störenden Belag bildet. Außerdem ist Melamin, wie z. B. in US 4001 177 beschrieben wird, in Polyamiden kaum löslich, wodurch es sehr schwer ist, Melamin homogen in den Polyamiden zu verteilen. Melamin liegt daher wie ein ungelöster Füllstoff im Polymeren vor, wodurch die mechanischen Eigenschaften stark beeinträchtigt werden und der Kunststoff sein transluzentes Aussehen verliert und weiß wird. Auch die Einsatzmöglichkeit zur Herstellung von Polyamidfasern, bei der schon sehr fein gemahlene Füllstoffe zu Düsenverstopfungen und Faserriß führen können, ist stark eingeschränkt. Der größte Nachteil von Melamin bei Verwendung als Flammhemmer für Polyamide ist jedoch, daß keine ausreichende Flammfestigkeit der Polyamide erreicht wird.

Auch die alleinige Verwendung von Dicyandiamid bringt Nachteile mit sich. So ist zum Beispiel in DE 39 09 145 beschrieben, daß Dicyandiamid ebenfalls zum Ausblühen neigt, wodurch sich, wie bei der alleinigen Verwendung von Melamin, ein störender Belag in Spritzgußformen oder auf dem verarbeiteten Polyamid selbst bildet.
Die mechanischen Eigenschaften der mit Dicyandiamid allein ausgerüsteten Polyamide sind ebenfalls nicht zufriedenstellend. Der größte Nachteil von Dicyandiamid bei alleiniger Verwendung als Flammhemmer ist aber, daß die Polyamide bei der Weiterverarbeitung durch Dicyandiamid stark abgebaut werden.

Es wurden auch schon Kombinationen von Melamin mit Cyanursäure oder Isocyanursäure zur Verwendung als Flammhemmer für Polyamide beschrieben (US 4 001 177), doch wie aus DE 27 40 092 bekannt ist, treten auch bei diesen Flammhemmerkombinationen Ausblüherscheinungen in hohem Maße auf und es ist weiters erforderlich, diese Flammhemmerkombination in Konzentrationen von mindestens 10 Gew. % zuzusetzen um eine befriedigende Flammfestausrüstung zu erzielen. Die mit dieser Flammhemmerkombination ausgerüsteten Polyamide besitzen außerdem schlechtere mechanische Eigenschaften als die entsprechenden Polyamide ohne Flammhemmer.

Aufgabe der vorliegenden Erfindung war es demnach, einen Flammhemmer für Polyamide zu finden, der weder zum Ausblühen neigt, noch wie ein ungelöster Füllstoff im Polymeren vorliegt, sodaß die mechanischen Eigenschaften der Polyamide nicht, beziehungsweise kaum verschlechtert werden und der das transluzente Aussehen der Polyamide nicht verändert.
Unerwarteterweise konnte diese Aufgabe mit einer Kombination von Dicyandiamid mit Melamin gelöst werden.

Gegenstand der vorliegenden Erfindung sind demnach flammfeste Polyamide, die dadurch gekennzeichnet sind, daß sie Dicyandiamid und Melamin enthalten.
Polyamide, die mit dieser Flammhemmermischung versehen werden, können sowohl Homo- als auch Copolyamide sein. Sie werden beispielsweise durch Polymerisation eines Lactams, einer Aminosäure oder durch Polykondensation eines Diamins und einer Dicarbonsäure erhalten.
Beispiele für Polyamide sind solche, die durch Polymerisation von Epsilon-Caprolactam, Aminocapronsäure, 7-Aminoheptansäure, 11-Aminoundecansäure, 9-Aminononansäure und alpha-Pyrrolidon, alpha-Piperidon erhalten werden, oder Polymere die durch Polykondensation eines Diamins, wie etwa Hexamethylendiamin, Nonamethylendiamin, Undecamethylendiamin, Dodecamethylendiamin und Methaxylylendiamin mit einer Dicarbonsäure wie Terephthalsäure, Isophthalsäure, Adipinsäure, Sebacinsäure, einer zweibasischen Dodecansäure und Glutarsäure oder durch Copolymerisation derselben, erhalten werden.
Dies sind beispielsweise Polycaprolactam (Nylon 6), Polyhexamethylenadipinsäureamid (Nylon 66), Polyhexamethylenazelain-säureamid (Nylon 69), Polyhexamethylensebacinsäureamid (Nylon 610), Polyhexamethylendodecandisäureamid (Nylon 612), Polypyrrolidon (Nylon 4), Polycapryllactam (Nylon 8), Poly(omega-aminoundecansäure) (Nylon 11), Poly(omega-dodecanlactam) (Nylon 12), und deren Copolyamide und Terpolyamide wie zum Beispiel Nylon 6/66, Nylon 6/12, Nylon 6/6T, wobei T Therephthalsäure bedeutet, Nylon 66/BAC 6, wobei BAC 1,3 - oder 1,4- bis-Aminocyclohexan bedeutet, Nylon 6/66/12 und Nylon 6/610/PACM10, wobei PACM 4,4'-Diaminodicyclohexylmethan bedeutet.

Bevorzugte Polyamide sind Nylon 6, Nylon 66, Nylon 610, Nylon 612, Nylon 11 und Nylon 12.

Um die Polyamide flammfest auszurüsten, werden bevorzugt Dicyandiamid und Melamin vor der Zugabe zu einem Polyamid in dem gewünschten Gewichtsverhältnis in üblichen Mischvorrichtungen, wie Pulvermischer, etwa Fließbettmischer, rotierende Mischbehälter, Mischer mit rotierenden Mischwerkzeugen, z. B. Pflugschaufelmischer oder Paddelmischer zu einer homogenen Mischung zusammengemischt.
Etwa 95 Gew.% dieser homogenen Mischung sollen eine Korgröße unter 25 µm und etwa 50 Gew. % der Mischung eine Korngröße unter 10 µm aufweisen.

Weiters können dieser Flammhemmermischung gegebenenfalls übliche Additive wie Rieselhilfen, Gleitmittel, Dispergiermittel und Haftvermittler zugesetzt werden. Die so erhaltene Flammhemmermischung wird dann im gewünschten Prozentsatz mit dem flammfest auszurüstenden Polyamid, wiederum in üblichen Mischvorrichtungen wie Schneckenextrudern, Strangpressen, Spritzgußmaschinen, Brabender- oder Banbury Mühlen vermischt.
Es ist jedoch auch möglich, Dicyandiamid und Melamin dem entsprechenden Polyamid ohne vorheriges Zusammenmischen zuzugeben. Dabei werden die beiden Flammhemmerkomponenten einzeln im gewünschten Gewichtsverhältnis und Prozentsatz dem entsprechenden Polyamid direkt zugesetzt und die so erhaltene 3-Komponentenmischung in den oben erwähnten Mischvorrichtungen vermischt.
Die nach einer der oben beschriebenen Möglichkeiten erhaltene 3-Komponentenmischung wird dann üblicherweise aufgeschmolzen und beispielsweise durch Extrusions- oder Spritzgußverfahren zu den gewünschten Endprodukten weiterverarbeitet, die aufgeschmolzene Polyamidmischung kann aber auch zu Granulaten verarbeitet werden. Es kommen jedoch auch andere Verarbeitungstechniken, wie etwa Sintern oder Verpressen, in Frage.
Je nach Art des Polyamids enthalten die Polymere in Summe etwa 1 bis 30 Gew.%, bevorzugt 3 - 20 Gew. % an Dicyandiamid und Melamin.

Das Gewichtsverhältnis von Dicyandiamid zu Melamin beträgt dabei etwa 0,1 bis 3 zu 1 vorzugsweise 0,5 bis 2 zu 1, und besonders bevorzugt 1 bis 1,5 zu 1.

Neben der Flammhemmerkombination können die Polyamide gegebenenfalls noch übliche Additive, wie Stabilisatoren, Oxidationsverzögerer, UV-Stabilisatoren, Farbstoffe, Pigmente, Weichmacher, verstärkende Füllstoffe, wie Glimmer, Kreide, Silikate, Kieselsäure, Quarzmehl, Graphite und andere, in üblichen Mengen enthalten. Ebenso können die flammfesten Polyamide auch Verstärkungsfasern, beispielsweise Glasfasern oder Kohlenstoffasern enthalten.

Gegebenenfalls können auch zusätzliche Flammhemmer, insbesondere halogenfreie, zugegeben werden.

Die Kombination von Dicyandiamid und Melamin neigt, im Gegensatz zu ihren Einzelkomponenten nicht zum Ausblühen aus dem verarbeiteten Polyamid. Weiters liegt sie, wiederum im Gegensatz zu den Einzelkomponenten, in gelöster Form im Polymeren vor.
Aus diesen Gründen werden die mechanischen Eigenschaften der Polyamide nach Zugabe der Flammhemmermischung kaum negativ beeinflußt, sondern teilweise sogar verbessert. Weiters weisen die flammhemmend ausgestatteten Polyamide dasselbe transluzente Aussehen, wie die Polyamide ohne Flammhemmer auf.

Die erfindungsgemäß mit Dicyandiamid und Melamin ausgerüsteten Polyamide eignen sich beispielsweise zur Herstellung von Formkörpern, etwa für Elektrogeräte und für Teile, bei denen eine gute Oberfläche erwünscht ist, wie etwa Abdeckungen oder sichtbare Gehäuse. Besonders eignen sie sich zur Herstellung von dünnwandigen Teilen, Folien und Fasern.

In den folgenden Beispielen wurden folgende Polyamide flammhemmend ausgerüstet:
- PA 6: Nylon 6 (Ultramid B4, Fa. BASF)
- PA 66: Nylon 66 (Durethan A31, Fa. Bayer)
- PA12: Nylon 12 (Vestamid L1621, Fa. Hüls)

Die Flammfestigkeit der Polyamide wurde nach dem Brenntest Underwriter-Laboratories Nr. 94 (UL 94) geprüft. Weiters wurden die Polyamide auf ihre mechanischen Eigenschaften, wie Zugfestigkeit, 3-Punktbiegemodul, Schlagbiegefestigkeit und Kerbschlagfestigkeit untersucht.

### Beispiel 1

Auf einem Zweischneckenextruder der Fa. Leistritz wurde PA 6 mit 5 Gew. % einer 1 : 1 Mischung aus Dicyandiamid und Melamin versetzt und zu Granulat verarbeitet. Die Extrusionstemperatur betrug 270°C. Anschließend wurde das Granulat zu Platten verpreßt. Die Platten hatten ein transluzentes Aussehen wie Polyamid ohne Füllstoffe.

### Beispiel 2

Es wurde eine Mischung aus Dicyandiamid und Melamin im Verhältnis 0,5 : 1 hergestellt und analog zu Beispiel 1 auf dem Zweischneckenextruder in PA 6 in einer Konzentration von 5 Gew% eingearbeitet.

### Beispiel 3

Analog zu Beispiel 1 wurde PA 6 mit einerMischung aus Dicyandiamid und Melamin im Verhältnis 1 : 1 versetzt.

### Beispiel 4

Auf dem Zweischneckenextruder wurde PA 66 mit 5 Gew.% einer 1 : 1 Mischung aus Dicyandiamid und Melamin bei 290°C extrudiert, granuliert und anschließend zu Platten verpreßt.

### Beispiel 5

PA 12 wurde mit 5 Gew. % einer 1 : 1 Mischung aus Dicyandiamid und Melamin bei 200°C extrudiert, granuliert und anschließend zu Platten verpreßt.

### Beispiel 6

PA 66 wurde mit 20 Gew. % einer 2 : 1 Mischung aus Dicyandiamid und Melamin zusammen mit 25 Gew.% Kurzglasfasern der Fa. Vetrotex (Vitrofil CS 300) bei 300°C zu einer homogenen Mischung und anschließend zu Platten verarbeitet.

### V1 - V4

Analog zu Beispiel 1 wurde PA6 einmal ohne Flammhemmerzusatz (V1), mit 5 Gew.% Melamin (V2), mit 5 Gew.% Dicyandiamid (V3) und mit 5 Gew.% Melamincyanurat (V4) zu Granulaten und anschließend zu Platten verarbeitet:
In Tabelle 1 sind die Ergebnisse der Brandtests, die Zugfestigkeiten (ZF), 3-Punkt-Biegemodule (E), die Schlagbiegefestigkeit (SF) und die Kerbschlagfestigkeiten (KF) zusammengefaßt.

**Tabelle 1**

| Bsp. | Brandklasse | Aussehen | ZF (N/mm²) | E (N/mm²) | KF (kJ/m²) | SF (kJ/m²) |
|---|---|---|---|---|---|---|
| 1 | V - O | transluzent | 77 | 2800 | 8,0 | 5xb.n. |
| 2 | V - O | transluzent | 76 | 2700 | 7,0 | 5xb.n. |
| 3 | V - O | transluzent | 77 | 2600 | 6,0 | 5xb.n. |
| 4 | V - O | transluzent | 78 | 2800 | 6,5 | 5xb.n. |
| 5 | V - O | transluzent | 40 | 1200 | 24 | 5xb.n. |
| 6 | V - O | transluzent | 206 | 8300 | 157 | 88 |
| V1 | V - 2 | transluzent | 78 | 2535 | 8,3 | 5xb.n. |
| V2 | V - 2 | weiß | 73 | 2600 | 50 | 5xb.n. |
| V3 | V - O | transluzent | 75 | 2700 | 6,5 | 73 |
| V4 | V - 2 | weiß | 74 | 2966 | 7,5 | 5xb.n. |
| 5xb.n. Die Probe ist auch nach 5 Versuchen nicht gebrochen. | | | | | | |

## Patentansprüche

1. Flammfeste Polyamide, dadurch gekennzeichnet, daß sie Dicyandiamid und Melamin enthalten.

2. Flammfeste Polyamide nach Anspruch 1, dadurch gekennzeichnet, daß sie insgesamt 1 bis 30 Gew. % an Dicyandiamid und Melamin enthalten.

3. Flammfeste Polyamide nach Anspruch 1 oder 2, dadurch gekennzeichnet, daß Dicyandiamid und Melamin in einem Gewichtsverhältnis von 0,1 bis 3 zu 1 enthalten sind.

4. Homogene Mischung aus Dicyandiamid und Melamin zur Herstellung von flammfesten Polyamiden.

5. Homogene Mischung nach Anspruch 4, dadurch gekennzeichnet, daß etwa 95 Gew. % der Mischung eine Korngröße unter 25 µm und etwa 50 Gew% der Mischung eine Korngröße unter 10 µm aufweisen.

6. Homogene Mischung nach Anspruch 4, dadurch gekennzeichnet, daß sie gegebenenfalls übliche Additive enthält.

7. Verfahren zur Herstellung von flammfesten Polyamiden dadurch gekennzeichnet, daß Polyamide mit Dicyandiamid und Melamin vermischt werden.

8. Verfahren nach Anspruch 7 dadurch gekennzeichnet, daß zuerst Dicyandiamid und Melamin im gewünschen Gewichtsverhältnis vermengt werden und diese Mischung anschließend dem Polyamid zugemischt wird.

9. Verwendung flammfester Polyamide nach Anspruch 1 zur Herstellung von dünnwandigen Teilen, Folien und Fasern.
